# EUROPEAN PATENT APPLICATION

(11) **EP 4 646 920 A1**
(43) Date of publication of application: **12.11.2025**
(21) Application number: 25170119.9
(22) Date of filing: 11.04.2025
(51) Int. Cl.: A01G 3/06

(54) **GARDENING TOOL**

(30) Priority: 08.05.2024 GB 202406424
(71) Applicant: Jones, William Lawrence, Welshampton, Ellesmere Shropshire SY12 0PQ (GB)
(72) Inventor: Jones, William Lawrence, Welshampton, Ellesmere Shropshire SY12 0PQ (GB)
(74) Representative: Wilson Gunn

(57) **Abstract**

The invention provides a lawn edging tool comprising: a handle; a blade connected to the handle, said blade configured to extend into and cut through a lawn when the lawn edging tool is run over a lawn surface, in use; and an emptying mechanism configured to remove lawn waste from the blade, in use.

## Description

### Technical Field of the Invention

The present invention relates to a lawn edging tool, and methods of manufacturing and using such a tool.

### Background to the Invention

Lawn maintenance and landscaping are integral aspects of property care, contributing to the aesthetic appeal and overall value of residential and commercial spaces. Among the various tasks involved, achieving clean and precise edges along garden beds, walkways and driveways is crucial for a polished appearance.

Conventional lawn edging tools, while effective to some extent, often present challenges and limitations. These tools may lack precision, resulting in uneven edges or damage to surrounding vegetation. Additionally, known manual edging methods can be time-consuming and labour-intensive, requiring repetitive bending and lifting motions that may lead to fatigue and discomfort for users.

Another major issue with conventional lawn edging tools is their limited capability to effectively manage the lawn waste generated during the edging process. This often results in the accumulation of waste, such as grass clippings and debris, along lawn edges, detracting from the overall appearance of the lawn and requiring additional cleanup efforts.

It is an aim of embodiments of the present invention to provide a lawn edging tool that addresses or ameliorates one or more of the above problems.

It is also an aim of embodiments of the present invention to overcome or mitigate at least one problem of the prior art, whether expressly described herein or not.

### Summary of the Invention

According to a first aspect of the invention, there is provided a lawn edging tool comprising: a handle; a blade connected to the handle, said blade configured to extend into and cut through a lawn when the lawn edging tool is run over a lawn surface, in use; and an emptying mechanism configured to remove lawn waste from the blade, in use.

Such a lawn edging tool provides for a clean, precise and well-defined edge between a lawn and other surface, with minimal to no damage or disruption caused to surrounding turf and vegetation. The edging process is also efficient and requires minimal effort on the part of the user, such that lawn edging can be achieved by simply running the tool over a lawn surface at a lawn edge.

In addition, the emptying mechanism allows for lawn waste to be effectively managed and easily disposed of, reducing time and effort involved in additional cleanup efforts after the lawn edging process.

Such a lawn edging tool may also be used alongside and assist the use of conventional lawn edging shears by providing a means to create precise and uniform edges before refining them with shears. Edging of a lawn, especially adjacent to a hard surface, with the tool of the invention prior to using lawn edging shears allows for the shears to operate easily at the edge between the lawn and hard surface such that wear to the lawn shears is dramatically reduced.

The term 'lawn' is taken to include an area of grass or other botanical ground cover. Other botanical ground covers may include but are not limited to ground covers comprising plants such as sedges, low herbs, wildflowers, and moss.

The term 'lawn waste' is taken to include any organic or inorganic material generated during lawn maintenance activities. This includes but is not limited to grass and other plant clippings, soil, leaves, rocks, stones, twigs, and other debris.

In preferred embodiments, the handle comprises an elongate shaft. The elongate shaft may preferably be substantially straight along the length of the shaft. The elongate shaft may comprise a pole or pole-like structure. The shaft may comprise a flattened pole. The shaft may be made out of any suitable material, such as metal or wood.

In some preferred embodiments, at least part of the cross-section of the elongate shaft perpendicular to the length of the shaft is substantially triangular in shape. Such a cross-sectional shape allows a user to establish a firm grip on the handle when exerting the force required to run the lawn edging tool over the lawn surface. At least one vertex and preferably all vertices of the triangular cross-section may by curved.

In some embodiments, the handle comprises a grip portion. The grip portion provides a user with a secure and comfortable grip on the handle, allowing for better control and manoeuvrability of the tool during operation. The grip portion may be made of rubber or another suitable non-slip material. The grip portion may be textured and/or comprise raised portions to enhance traction and prevent slipping during operation. In some preferred embodiments, the grip portion is present at an end of the handle. The grip portion may comprise a rubber moulding that is preferably attached to the end of the handle.

In preferred embodiments, the blade is connected to an end of the handle.

In embodiments in which the handle comprises a grip portion at an end of the handle, the blade is preferably connected to an opposite end of the handle to the grip portion.

In some embodiments, the blade extends from the end of the handle at an angle of at least 90 ° relative to the handle, or at least 92, 94, 96, 98, or at least 100 ° relative to the handle. In some embodiments, the blade extends from the end of the handle at an angle of no greater than 170 ° relative to the handle, or no greater than 165, 160, 155, 150, 145, 140, 135, 130, 125, 120, 115, 110, or no greater than 105 ° relative to the handle. The blade may extend from the end of the handle at an angle of between 90-140 ° relative to the handle, or between 90-130, 90-120, or preferably between 90-110 ° relative to the handle, more preferably between 95-105 ° relative to the handle. In some preferred embodiments, the blade extends from the end of the handle at an angle of around 100 ° relative to the handle. In embodiments in which the handle comprises an elongate shaft, the above angles may preferably be measured relative to the longitudinal axis of the shaft. Providing the blade at such angles relative to the handle allows the blade to easily and effectively rupture the lawn surface and extend into the lawn, allowing for a clean slit/groove to be formed in the lawn with minimal force required to be exerted by a user.

In some embodiments, the blade may be directly connected to the end of the handle. In some embodiments, the blade may be integrally connected with the handle. In other embodiments, the blade may be connected to the end of the handle via a connector.

The connector may be integral with the blade and/or integral with the handle.

In some embodiments, the connector extends from the end of the handle to which the blade is connected. The connector may extend from the end of the handle in line with the longitudinal axis of the handle. In embodiments in which the handle comprises an elongate shaft, the connector may extend from an end of the shaft in line with the longitudinal axis of the shaft. In such embodiments, the blade may extend from the connector at the same angle at which the blade extends relative to the handle, and which may preferably be as described in statements of invention above.

When not integrally formed with the blade/handle, the connector may be connected to the blade/handle using any suitable means of connection. Suitable means of connection may be independently selected from the group consisting of: a threaded fastening, a clamp fastening, a snap-fit connection, a weld, an interlocking connection, a bayonet connection, and combinations thereof.

In some embodiments, the connector may form an interlocking connection with the end of the handle. In such embodiments, the connector may comprise a flat structure that extends into a recess or opening that is present at or on the end of the handle.

In some embodiments, the blade comprises a tip, a heel opposite the tip, a cutting edge extending between the tip and the heel, and a spine extending between the tip and the heel opposite the cutting edge. The tip of the blade is preferably positioned farther away from the handle than the heel. The blade is preferably substantially flat.

The cutting edge may be a straight edge or curved edge. In preferred embodiments, the cutting edge is a straight edge. The cutting edge may be canted.

The spine may be curved or straight, and is preferably curved. The spine may have a substantially semi-circular shape.

In some embodiments, the cross-sectional width of the cutting edge reduces from the heel to the tip, such that the cross-sectional width of the cutting edge adjacent to the heel is greater than the cross-sectional width of the cutting edge adjacent to the tip. In such embodiments, the cutting edge is preferably a straight edge.

The cross-sectional width of the cutting edge adjacent to the tip may be no greater than 60% of the cross-sectional width adjacent to the heel, or no greater than 55, 50, 45, 40, 35, or preferably no greater than 30% of the cross-sectional width adjacent to the heel, or no greater than 27% of the cross-sectional width adjacent to the heel. The cross-sectional width of the cutting edge adjacent to the tip may be between 5-45% of the cross-sectional width adjacent to the heel, or between 10-40%, or between 15-35%, or preferably between 20-30% of the cross-sectional width adjacent to the heel. In some preferred embodiments, the cross-sectional width of the cutting edge adjacent to the tip is around 25% of the cross-sectional width adjacent to the heel.

Narrowing of the cutting edge between the heel and the tip allows the blade extend into and cut through the lawn easily and cleanly, with minimal effort required on the part of the user.

In some embodiments, the cross-sectional width of the cutting edge adjacent to the heel may be at least 1 mm, or at least 2, 3, or at least 4 mm. The cross-sectional width of the cutting edge adjacent to the heel may be no greater than 20 mm, or no greater than 15, 10, or no greater than 5 mm. The cross-sectional width of the cutting edge adjacent to the heel may be between 2-6 mm, or between 3-5 mm.

In some embodiments, the cross-sectional width of the cutting edge adjacent to the tip may be at least 0.2 mm, or at least 0.4, 0.6, 0.8, or at least 1 mm. The cross-sectional width of the cutting edge adjacent to the heel may be no greater than 4 mm, or no greater than 3, 2, or no greater than 1 mm. The cross-sectional width of the cutting edge adjacent to the heel may be between 0.25-2 mm, or between 0.5-1.5 mm.

In some embodiments, the cutting edge of the blade extends from the handle at an angle of at least 90 ° relative to the handle, or at least 92, 94, 96, 98, or at least 100 ° relative to the handle. In some embodiments, the cutting edge of the blade extends from the handle at an angle of no greater than 170 ° relative to the handle, or no greater than 165, 160, 155, 150, 145, 140, 135, 130, 125, 120, 115, 110, or no greater than 105 ° relative to the handle. The cutting edge of the blade may extend from the handle at an angle of between 90-140 ° relative to the handle, or between 90-130, 90-120, or preferably between 90-110 ° relative to the handle, more preferably between 95-105 ° relative to the handle. In some preferred embodiments, the cutting edge of the blade extends from the handle at an angle of around 100 ° relative to the handle. The above angles are preferably measured directly from the cutting edge to the handle and do not pass through the spine of the blade. In such embodiments, the cutting edge is preferably a straight edge. In embodiments in which the handle comprises an elongate shaft, the above angles may preferably be measured relative to the longitudinal axis of the shaft. Providing the cutting edge of the blade at such angles relative to the handle allows the blade to easily and effectively rupture the lawn surface and extend into the lawn, allowing for a clean slit/groove to be formed in the lawn with minimal force required to be exerted by a user. This effect is especially exemplified when the cutting edge is a straight edge, as the combination of the angle with the straight edge allows the blade to smoothly slide and cut through the lawn when the user runs the lawn edging tool over the lawn surface with the cutting edge facing the user.

The blade may be made from any suitable rigid material, such as metal.

In some embodiments, the emptying mechanism comprises at least one arm configured to remove the lawn waste from a face of the blade, in use. In some preferred embodiments, at least one arm may be configured to remove the lawn waste from a face of the blade by scraping the lawn waste from the face of the blade. At least one arm of the emptying mechanism may comprise an elongate bar having at least one flat face. At least one arm of the emptying mechanism may comprise a flat elongate bar having two opposing faces.

At least one arm of the emptying mechanism may comprise a canted edge. The canted edge may be configured to scrape the lawn waste from a face of the blade, in use. A canted edge on at least one arm is particularly advantageous, as it assists in the scraping of difficult to remove lawn waste, such as mud and grass which have become stuck to the blade face, allowing such waste to be removed with ease.

The emptying mechanism may comprise a pair of arms arranged to remove the lawn waste from opposing faces of the blade, in use, preferably by scraping the lawn waste from the opposing faces of the blade. The pair of arms may be configured to remove the lawn waste from the opposing faces of the blade simultaneously, preferably by simultaneously scraping the lawn waste from the opposing faces of the blade. Both arms may comprise a canted edge to ease the removal of lawn waste from both faces of the blade, in use.

In some embodiments, both arms of the emptying mechanism superimpose each other. Each arm may comprise an elongate bar having at least one flat face, preferably two opposing flat faces. A face of one of the bars may superimpose at least 50% of the surface area of a face of the other bar, or at least 60, 70, 80, 90, or at least 95% of the surface area of a face of the other bar, or a face of one of the bars may superimpose substantially 100% of the surface area of a face of the other bar. Both arms of the emptying mechanism may define a gap therebetween configured to accommodate the blade, in use. Both arms of the emptying mechanism may be connected to each other. In embodiments in which the arms comprise elongate bars, both bars may be connected to each other at an end thereof. The bars may be connected to each other at two opposing ends thereof. The arms of the emptying mechanism may be connected to each other such that they define a gap between them configured to accommodate the blade, such as a gap between the faces of both bars that are connected to each other. The arms may be connected to each other using any suitable means of connection, such as a threaded fastening.

The arm or arms of the emptying mechanism may be pivotably attached to and extend from one of: the handle, preferably an end thereof; the blade; and a connector that connects the blade to the handle. The arm or arms may be attached to the handle/blade/connector using any suitable means of connection. Suitable means of connection may be independently selected from the group consisting of: a threaded fastening, a clamp fastening, a snap-fit connection, a weld, an interlocking connection, a bayonet connection, and combinations thereof. In some embodiments, the arm or arms of the emptying mechanism are pivotably attached to the handle or the connector at the same position in which the blade is directly connected to the handle or connected to the connector, or in which an integral connection between the blade and the handle or connector is formed.

In embodiments in which the arm or arms are attached to an end of the handle or to a connector that is attached to an end of the handle, the end of the handle may preferably be the same end of the handle to which the blade is connected.

In some embodiments, the arm or arms of the emptying mechanism are movable about the pivotable attachment between a rest position, in which the arm or arms of the emptying mechanism are not superimposed with a face of the blade, and an engaged position, in which the arm or arms of the emptying mechanism are superimposed with a face of the blade.

The arm or arms may comprise an elongate bar having at least one flat face, preferably two opposing flat faces. In the engaged position of such embodiments, at least one face of the bar or bars may superimpose at least 20% of the surface area of a face of the blade, or at least 30, 40, 50, 60, 70, 80, 90, or at least 95% of the surface area of a face of the blade, or may superimpose substantially 100% of the surface area of a face of the blade.

In the rest position, the arm or arms may extend at an angle relative to the handle that is lower than the angle at which the blade (and preferably the cutting edge thereof) extends relative to the handle. In embodiments in which the handle comprises an elongate shaft, the angle is preferably measured relative to the longitudinal axis of the shaft. In the rest position, the arm or arms may extend at an angle relative to the handle of less than 100 °, or less than 90 °, 80 °, 70 °, 60 °, 50 °, 40 °, or less than 30 °.

In the engaged position, the arm or arms may extend at the same angle relative to the handle as the blade (and preferably the cutting edge thereof). In the engaged position, the blade may be positioned in the gap defined by both arms of the emptying mechanism, as described in statements of invention above.

On moving from the rest position to the engaged position, in use, the arm or arms of the emptying mechanism may be configured to remove the lawn waste from a face of the blade, preferably by scraping the lawn waste from the face of the blade.

On moving from the rest position to the engaged position, in use, the arm or arms of the emptying mechanism may be configured to contact a face of the blade and/or to contact lawn waste present on the blade.

In embodiments in which the arm or arms comprise a canted edge, the canted edge may be the edge positioned nearest to the blade in the rest position, such that on moving from the rest to the engaged position, in use, the canted edge may be the first edge to contact the blade and/or to contact lawn waste present on the blade.

The emptying mechanism may comprise means for moving the arm or arms of the emptying mechanism from the rest position to the engaged position. The means for moving the arm or arms of the emptying mechanism from the rest position to the engaged position may comprise a lever. The lever may be connected to the arm or arms of the emptying mechanism, such that activating the lever effects movement of the arm or arms about the pivotable connection from the rest position to the engaged position, in use.

The emptying mechanism may comprise at least one biasing means for biasing the arm or arms of the emptying mechanism into the rest position. The biasing means may comprise a spring. An end of the spring may be connected to the blade and another end of the spring may be connected to the arm or arms, such that the spring becomes taut when the arm or arms of the emptying mechanism are in the engaged position and acts to bias the arm or arms to return to the rest position, in use.

According to a second aspect of the invention, there is provided a method of manufacturing a lawn edging tool according to the first aspect of the invention, the method comprising the steps of:
(a) Providing a handle;
(b) Providing a blade and connecting the blade to the handle to provide a base tool, such that the blade is configured to extend into and cut through a lawn when the tool is run over a lawn surface during use; and
(c) Providing the base tool with an emptying mechanism configured to remove lawn waste from the blade during use.

Statements of invention above relating to the first aspect of the invention may also be applied *mutatis mutandis* to the second aspect of the invention.

According to a third aspect of the invention, there is provided a method of edging a lawn comprising the steps of:
(a) Providing a lawn edging tool according to the first aspect of the invention;
(b) Running the lawn edging tool over a lawn surface at a lawn edge such that the blade of the tool extends into and cuts through the lawn; and
(c) Optionally activating the emptying mechanism of the tool to remove lawn waste from the blade.

Statements of invention for the first aspect of the invention above may also be applied *mutatis mutandis* to the third aspect of the invention.

In some embodiments, step (b) comprises running the lawn edging tool over the lawn surface towards the user of the tool. In such embodiments, the user may grip the handle of the lawn edging tool and run the tool over the lawn surface towards them. In such embodiments, the cutting edge of the blade preferably faces the user when the lawn edging tool is run over the lawn surface.

Step (b) may comprise dragging the blade of the tool over the lawn surface.

**In** embodiments in which the blade of the tool comprises a tip, step (b) may comprise contacting the tip of the blade with the lawn surface and then running the lawn edging tool over the lawn surface, such that the tip of the blade cuts through the lawn surface to allow the blade to extend into the lawn.

The lawn edge may be an edge between the lawn and a further ground surface. The further ground surface may be a hard surface, such as a path or pavement. The further surface may be a paved, concreted, or asphalted surface. The further surface may comprise a granular material, such as sand or gravel. **In** some embodiments, the further surface may comprise soil, preferably uncovered soil. The further surface may comprise a flower bed.

In some embodiments, the lawn edge may be an edge between the lawn and a three-dimensional structure, such as a building or a fountain.

Step (c) may comprise activating means for moving the arm or arms of the emptying mechanism from the rest position to the engaged position, as described in statements of invention for the first aspect of the invention. Step (c) may comprise activating the lever, as described for the first aspect of the invention above.

### Detailed Description of the Invention

In order that the invention may be more clearly understood an embodiment thereof will now be described, by way of example only, with reference to the accompanying drawings, of which:
- Figure 1: shows a top-down view of a lawn edging tool according to the invention, with the emptying mechanism of the tool in a rest position;
- Figure 2: shows a perspective view along the handle of the tool of figure 1 displaying the cross-section of the handle;
- Figure 3: shows a zoomed-in top-down view of the lawn edging tool of figure 1, with the emptying mechanism of the tool in the rest position;
- Figure 4: shows a perspective view of the blade of the lawn edging tool of figure 1, displaying the cutting edge of the blade;
- Figure 5: shows a perspective view of the emptying mechanism of the lawn edging tool of figure 1;
- Figure 6: shows a top-down view of the lawn edging tool of figure 1 zoomed-in on the point of attachment of the emptying mechanism to the tool;
- Figure 7: shows a top-down view of canted edges present on the emptying mechanism of the lawn edging tool of figure 1;
- Figure 8: shows a top-down view of the lawn edging tool of figure 1, with the emptying mechanism of the tool in an engaged position; and
- Figure 9: shows the lawn edging tool of figure 1 being used to edge a lawn.

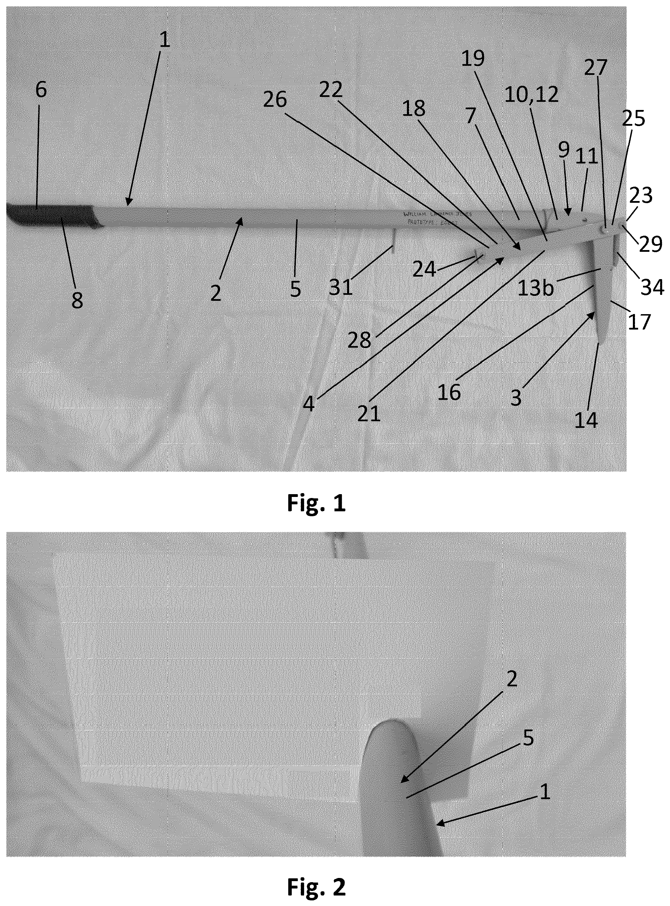

With reference to figures 1 and 2, a lawn edging tool 1 of the invention is provided, which comprises a handle 2, a blade 3 and an emptying mechanism 4.

Referring to figure 1, the handle 2 takes the form of a straight elongate metal shaft 5, having a first end 6 and a second end 7. As is more clearly displayed in figure 2, the elongate shaft 5 has a cross-section perpendicular to the length of the shaft 5 that is substantially triangular in shape, to enable a user to establish a firm grip on the handle 2.

The vertices of the triangular cross-section are curved (only one vertex shown in figure 2).

Referring back to figure 1, the first end 6 of the elongate shaft 5 comprises a grip portion 8 in the form of a rubber moulding that is attached to the first end 6 of the elongate shaft 5. This too allows a user to establish a firm grip on the handle 2.

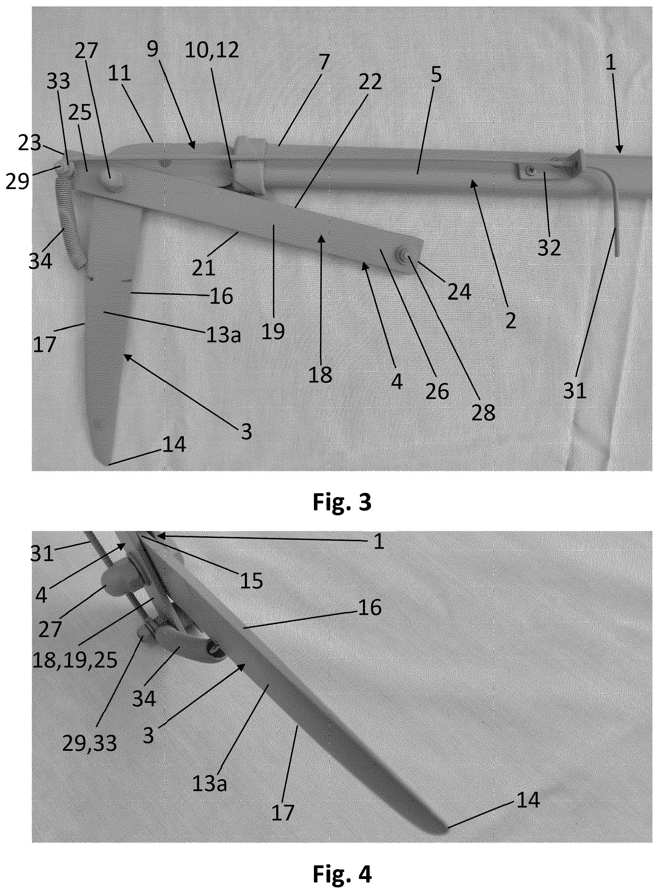

As shown in figures 1 and 3, the second end 7 of the elongate shaft 5 is connected to the blade 3 via a connector 9. The connector 9 comprises a flat, rounded rectangular metal structure having a pair of rounded short sides 10 and a pair of rounded long sides 11. The connector 9 extends from the second end 7 of the elongate shaft 5 in line with the longitudinal axis of the shaft 5. The connector 9 is connected to the shaft 5 by an interlocking connection 12, in which a short side 10 of the flat, rounded rectangular connector 9 extends into a recess (not shown) present on the second end 7 of the shaft 5.

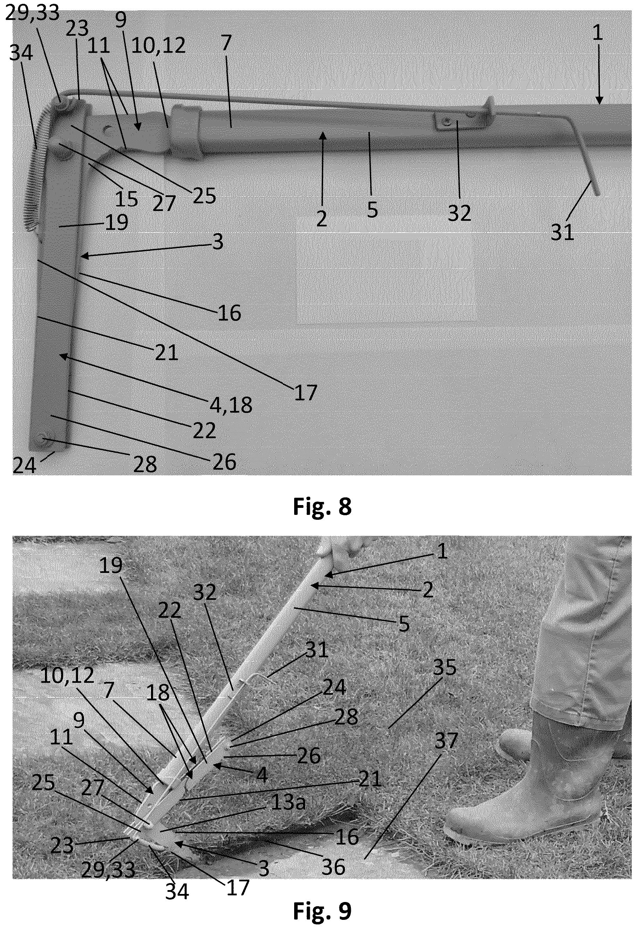

The blade 3 is integrally formed with the connector 9 and extends from a long side 11 of the connector 9, such that the blade 3 extends from the second end 7 of the shaft 5 at an angle of 100 ° relative to the longitudinal axis of the shaft 5. The blade 3 comprises a substantially flat metal structure having a first face 13a (shown in figure 3) and an opposing second face 13b (shown in figure 1). The blade 3 further comprises a tip 14, a heel 15 opposite the tip 14 and positioned at the long side 11 of the connector 9 from which the blade 3 extends (partly visible in figure 8), a cutting edge 16 extending between the tip 14 and the heel 15, and a spine 17 extending between the tip 14 and the heel 15 opposite the cutting edge 16.

As shown in figures 1 and 3, the cutting edge 16 of the blade is a straight edge. **In** contrast, the spine 17 is curved and has a substantially semi-circular shape.

As shown in figure 4, the cross-sectional width of the cutting edge 16 reduces from the heel 15 to the tip 14, such that the cross-sectional width of the cutting edge 16 adjacent to the heel 15 is greater than the cross-sectional width of the cutting edge 16 adjacent to the tip 14. The cross-sectional width of the cutting edge 16 adjacent to the heel 15 is approximately 4 mm and the cross-sectional width of the cutting edge 16 adjacent to the tip 14 is approximately 1 mm. The narrowing of the cutting edge 16 from the heel 15 to the tip 14 allows the blade 3 to more easily and cleanly extend into and cut through a lawn, in use.

As shown in figures 1 and 3, the cutting edge 16 of the blade 3 is positioned closer to the elongate shaft 5 than the spine 17, such that the cutting edge 16 extends from the second end of the shaft 7 at an angle of 100 °, wherein the angle is measured directly from the cutting edge 16 to the elongate shaft 5 and does not pass through the spine 17 of the blade 3. Providing the cutting edge 16 at such an angle relative to the shaft 5 allows the blade 3 to easily and effectively rupture a lawn surface in use and extend into the lawn to form a clean slit/groove. This effect is particularly exemplified due to the fact that the cutting edge 16 is a straight edge, as the combination of the angle with the straight edge allows the blade 3 to smoothly slide and cut through a lawn, in use.

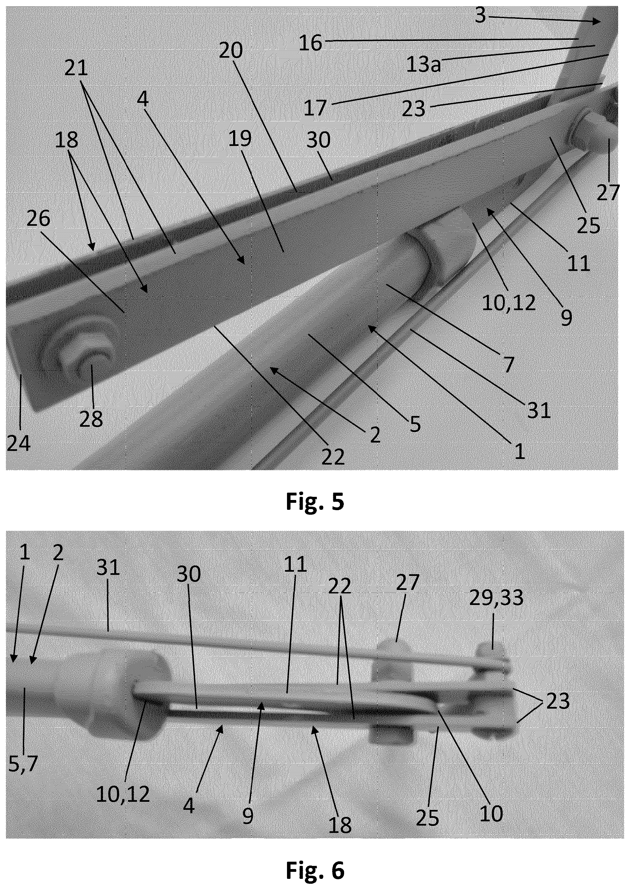

The lawn edging tool 1 further comprises an emptying mechanism 4, which in figures 1 and 3 is displayed in a rest position. As displayed in figures 1, 3 and 5, the emptying mechanism 4 comprises a pair of arms in the form of two fully superimposing rectangular elongate metal bars 18. Each bar 18 has an external face 19 and an opposing internal face 20 (shown partially in figure 5). Each external face 19 faces outward and each internal face 20 faces and fully superimposes the corresponding internal face 20 of the other bar 18. Each bar 18 also has a canted first long edge 21 (shown clearly in figure 5) and a non-canted second long edge 22, as well as a first short edge 23 and second short edge 24. The first short edge 23 is located at a first end 25 of each bar 18 and the second short edge 24 is located at a second end 26 of each bar 18.

As shown in figures 1, 3 and 6, both bars 18 are attached to each other and to the connector 9 at a single pivotable connection point 27 located at the first end 25 of each bar 18. On the connector 9, the pivotable connection point 27 is located at the long side 11 of the connector 9 from which the blade 3 extends. Both bars 18 are attached to each other and the connector 9 at the pivotable connection point 27 by way of a threaded fastening in the form of a nut and bolt connection. The bars 18 are attached to the connector 9 at the pivotable connection point 27 such that one bar 18 is attached to the connector 9 above the plane of the blade 3 and the other bar 18 is attached to the connector 9 below the plane of the blade 3.

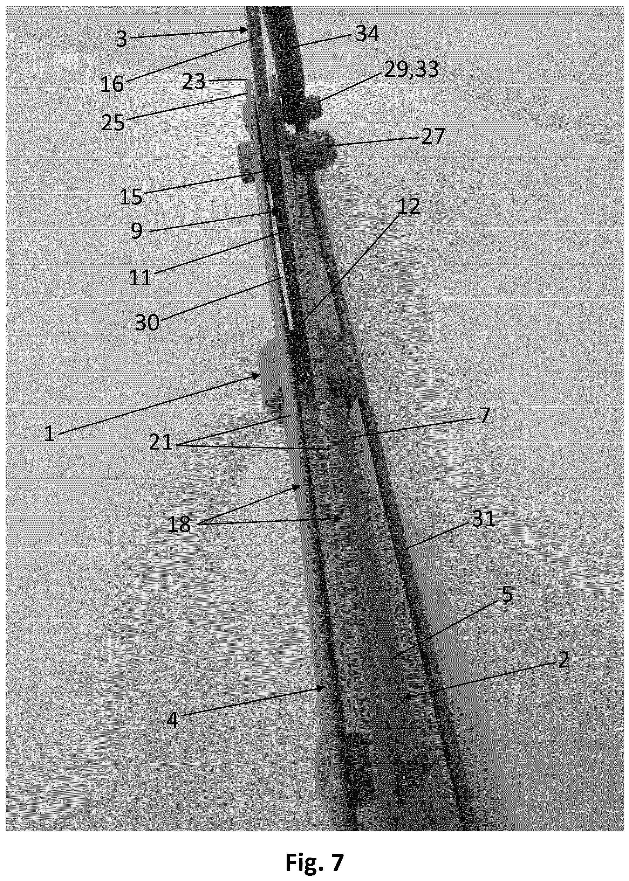

Both bars 18 are also attached to each other at the following two more connection points: a second connection point 28 located at the second end 26 of each bar 18; and a third connection point 29 which is positioned at the first end 25 of each bar 18 and is located closer to the first short edge 23 of each bar 18 than the pivotable connection point 27 (shown clearly in figure 6). The bars 18 are similarly attached to each other at the second and third connection points 28,29 by a nut and bolt connection. Both bars 18 are connected to each other at the pivotable, second and third connection points 27,28,29 such that the bars 18 fully superimpose each other and define a gap 30 (shown clearly in figure 7) between the internal faces 20 of both bars 18 that is configured to accommodate the blade 3.

**In** the rest position of the emptying mechanism 4 shown in figures 1 and 3, the bars 18 are connected to the connector 9 and to each other such that both bars 18 extend from the connector 9 at an angle relative to the longitudinal axis of the elongate shaft 5 that is lower than the angle at which the blade 3 extends relative to the shaft 5, such that the bars 18 and the blade 3 are not superimposed. **In** the rest position, the canted first long edges 21 of both bars 18 are positioned nearer (at a lower angle away from) the blade 3 than the non-canted second long edges 22 of the bars 18.

The bars 18 are rotatable about the pivotable connection point 27 between the rest position, in which the bars 18 are not superimposed with the faces 13a,13b of the blade 3, and an engaged position depicted in figure 8, in which the bars 18 are fully superimposed with the faces 13a,13b of the blade 3.

In the engaged position, as shown in figure 8, the bars 18 extend at the same angle relative to the longitudinal axis of the shaft 5 as the blade 3, such that the blade is positioned in the gap 30 between the internal faces 20 of both bars 18.

The emptying mechanism 4 further comprises means for moving the bars 18 from the rest position to the engaged position in the form of a lever 31. An end of the lever 30 is secured to the elongate shaft 5 by way of a holder in the form of an L-shaped clamp 32 that is attached to the shaft 5. The L-shaped clamp 32 ensures the lever 31 is secured to the shaft 5, but also enables the lever 31 to still be pulled and activated.

As shown in figure 6, an opposing end of the lever 31 is connected to a bolt 33 that is used to connect both bars 18 to each other at the third connection point 29.

The connection between the lever 31 and the bolt 33 establishes a connection between the lever 31 and the bars 18, such that pulling the lever 31 causes both bars 18 to rotate about the pivotable connection 27 to bring the bars 18 from the rest position to the engaged position.

The emptying mechanism 4 further comprises a biasing means in the form of a spring 34, for biasing both bars 18 to the rest position. As shown in figure 3, an end of the spring 34 is attached to the blade 3 adjacent to the spine 17 and the other end of the spring 34 is attached to the bolt 33 at the third connection point 29. The attachment of the spring 34 to the bolt 33 establishes a connection between the spring 34 and the bars 18.

The spring 34 is in a relaxed state when the emptying mechanism 4 is in the rest position. As the lever 31 is pulled to cause the bars 18 to move to the engaged position, this causes the spring 34 to become taut. When the lever 31 is released, the taut spring 34 acts to bias the bars 18 to return to the rest position.

Referring now to figure 9 which shows the lawn edging tool 1 being used to edge a lawn 35 at a lawn edge 36 between the lawn 35 and a hard surface in the form of concrete slab 37. In use, the user grips the elongate shaft 5 of the lawn edging tool 1 such that the cutting edge 16 of the blade 3 faces the user. The user then contacts the tip 14 of the blade 3 with the surface of the lawn 35 at the lawn edge 36, and then runs the lawn edging tool 1 over the surface of the lawn 35 at the lawn edge 36 towards them, such that the blade 3 of the tool 1 cuts through the surface of the lawn 35 and extends into and cuts through the lawn 35. The lawn edging tool 1 provides for a clean, precise and well-defined edge between the lawn 35 and the concrete slab 37 hard surface, with no damage or disruption caused to the surrounding turf or vegetation. Minimal effort is also required on the part of the user, as edging can be achieved by simply running the tool over the surface of the lawn 35.

After edging the lawn 35 as described above, the user removes the blade 3 from the lawn 35. If lawn waste is present on the blade faces 13a,13b, the user can activate the emptying mechanism 4 to remove the lawn waste from the blade 3. As described above, to activate the emptying mechanism 4, the user pulls the lever 31, which causes the bars 18 to move from the rest position to the engaged position. As the bars 18 simultaneously rotate from the rest position to the engaged position, they contact lawn waste present on the opposing blade faces 13a,13b and act to scrape the lawn waste from the faces 13a,13b of the blade 3. Given their positioning nearest to the blade 3, the canted first long edges 21 of the bars 18 are the first edges of the bars 18 to contact lawn waste present on the blade faces 13a,13b. This is particularly advantageous, as the canted edges 21 assist in the scraping of difficult to remove lawn waste from the blade faces 13a,13b, such as mud and grass which may have become stuck to the blade faces 13a, 13b during use, and allow for such waste to be removed with ease.

The user then releases the lever 31 which causes the emptying mechanism to return to the rest position, due to the bias generated by the spring 34, as described above.

As such, the emptying mechanism 4 allows for lawn waste to be effectively managed and easily disposed of, reducing time and effort involved in additional cleanup efforts after the lawn edging process.

The above embodiment is described by way of example only. Many variations are possible without departing from the scope of the invention as defined in the appended claims.

## Claims

1. A lawn edging tool comprising: a handle; a blade connected to the handle, said blade configured to extend into and cut through a lawn when the lawn edging tool is run over a lawn surface, in use; and an emptying mechanism configured to remove lawn waste from the blade, in use.

2. A lawn edging tool as claimed in claim 1, wherein the handle comprises an elongate shaft.

3. A lawn edging tool as claimed in claim 2, wherein at least part of the cross-section of the elongate shaft perpendicular to the length of the shaft is substantially triangular in shape.

4. A lawn edging tool as claimed in any preceding claim, wherein the blade is connected to an end of the handle, and wherein the blade preferably extends from the end of the handle at an angle of between 90-110 ° relative to the handle.

5. A lawn edging tool as claimed in claim 4, wherein the blade is connected to the end of the handle via a connector, wherein the connector is preferably integral with the blade and/or integral with the handle.

6. A lawn edging tool as claimed in any preceding claim, wherein the blade comprises a tip, a heel opposite the tip, a cutting edge extending between the tip and the heel, and a spine extending between the tip and the heel opposite the cutting edge, and wherein the tip of the blade is positioned farther away from the handle than the heel, wherein the cutting edge is preferably a straight edge, and wherein the spine is preferably curved, and preferably has a substantially semi-circular shape.

7. A lawn edging tool as claimed in claim 6, wherein the cross-sectional width of the cutting edge reduces from the heel to the tip, such that the cross-sectional width of the cutting edge adjacent to the heel is greater than the cross-sectional width of the cutting edge adjacent to the tip, and wherein the cross-sectional width of the cutting edge adjacent to the tip is preferably no greater than 30% of the cross-sectional width adjacent to the heel.

8. A lawn edging tool as claimed in claim 6 or 7, wherein the cutting edge of the blade extends from the handle at an angle of between 90-110 ° relative to the handle, wherein said angle is measured directly from the cutting edge to the handle and does not pass through the spine of the blade.

9. A lawn edging tool as claimed in any preceding claim, wherein the emptying mechanism comprises at least one arm configured to remove the lawn waste from a face of the blade, in use, preferably by scraping the lawn waste from the face of the blade, wherein the emptying mechanism optionally comprises a pair of arms arranged to remove the lawn waste from opposing faces of the blade, in use, wherein both arms of the emptying mechanism optionally superimpose each other, and wherein both superimposing arms of the emptying mechanism optionally define a gap therebetween configured to accommodate the blade, in use.

10. A lawn edging tool as claimed in claim 9, wherein both arms of the emptying mechanism are connected to each other.

11. A lawn edging tool as claimed in claim 9 or 10, wherein the arm or arms of the emptying mechanism are pivotably attached to and extend from one of: the handle, preferably an end thereof; the blade; and a connector that connects the blade to the handle.

12. A lawn edging tool as claimed in claim 11, wherein the arm or arms of the emptying mechanism are movable about the pivotable connection between a rest position, in which the arm or arms of the emptying mechanism are not superimposed with a face of the blade, and an engaged position, in which the arm or arms of the emptying mechanism are superimposed with a face of the blade, wherein the emptying mechanism preferably comprises means for moving the arm or arms of the emptying mechanism from the rest position to the engaged position, and wherein the means for moving the arm or arms of the emptying mechanism from the rest position to the engaged position optionally comprises a lever, wherein the lever is preferably connected to the arm or arms of the emptying mechanism, such that activating the lever effects movement of the arm or arms about the pivotable connection from the rest position to the engaged position, in use.

13. A lawn edging tool as claimed in claim 12, wherein the emptying mechanism comprises at least one biasing means for biasing the arm or arms of the emptying mechanism into the rest position, wherein the biasing means optionally comprises a spring, wherein an end of the spring is preferably connected to the blade and another end of the spring is connected to the arm or arms, such that the spring becomes taut when the arm or arms of the emptying mechanism are in the engaged position and acts to bias the arm or arms to return to the rest position, in use.

14. A method of manufacturing a lawn edging tool according to any preceding claim, the method comprising the steps of:
a. Providing a handle;
b. Providing a blade and connecting the blade to the handle to provide a base tool, such that the blade is configured to extend into and cut through a lawn when the tool is run over a lawn surface during use; and
c. Providing the base tool with an emptying mechanism configured to remove lawn waste from the blade during use.

15. A method of edging a lawn comprising the steps of:
a. Providing a lawn edging tool as claimed in any one of claims 1 to 13;
b. Running the lawn edging tool over a lawn surface at a lawn edge such that the blade of the tool extends into and cuts through the lawn; and
c. Optionally activating the emptying mechanism of the tool to remove lawn waste from the blade.
